# EUROPEAN PATENT APPLICATION

(11) **EP 1 538 812 A1**
(43) Date of publication of application: **08.06.2005**
(21) Application number: 03293004.2
(22) Date of filing: 01.12.2003
(51) Int. Cl.: H04L 29/14, G06F 11/20

(54) **System for redundantly exchanging information parts**

(71) Applicant: ALCATEL, 75008 Paris (FR)
(72) Inventor: Beugnies, Joris Bernard Albert, 9100 Nieuwkerken-Waas (BE); Geens, Ronald Maria Albert, 2900 Schoten (BE); Verbruggen, Bart Jozef Imelda, 3010 Kessel-Lo (BE)
(74) Representative: Plas, Axel

(57) **Abstract**

Systems like Local Area Networks for redundantly exchanging information parts between source nodes (1) and destination nodes (2) via different physical links (4,5) are simply constructed by introducing in the source node (1) source interfaces (13,14) and by introducing in the destination node (2) destination interfaces (23,24) and address detectors (52,53) for detecting source interface addresses in information parts and selectors (51) for in dependence of detected source interface addresses selecting one destination interface (23,24) for non-redundantly processing one of the redundantly exchanged information parts. The source interfaces (13,14) are defined by identical source interface addresses, and the source nodes (1) comprise suppliers (41) for supplying information parts comprising identical data parts to the source interfaces (13,14). The destination node (2) comprises monitors (54,55) for monitoring information parts received via the destination interfaces (23,24) and generators (56,57) for in response to monitoring results generating link parameters per physical link (4,5) and comparators (58,59) for comparing link parameters with thresholds for in response to comparison results controlling the selectors (51).

## Description

The invention relates to a system for redundantly exchanging information parts between a source node and a destination node via at least a first physical link and a different second physical link.

Such a system for example comprises a first local area network comprising the first physical link, and comprises a second local area network comprising the second physical link.

A prior art system is known from US 4,780,869, which discloses a local area network redundancy system using two cables over which duplicate information is transmitted in parallel in the form of identical message frames. Each receiver on the network includes a circuit which evaluates the signals from the two cables and selects one of the signals to be processed. This circuit determines the length of the message frames received on each cable for a given transmission and indicates which cable, if any, carried the longer frame. The signal from the cable that carried the longer frame is then selected as the output of the receiver. It is assumed that the longer message frame is the better of the two.

The known system is disadvantageous, inter alia, due to being relatively complex: the length of the message frames received on each cable need to be determined.

It is an object of the invention, inter alia, to provide a system as defined above which is relatively simple.

The system according to the invention is characterised in that the source node comprises a first source interface defined by a first source interface address and a second source interface defined by a second source interface address and that the destination node comprises a first destination interface and a second destination interface, which first interfaces are coupled to each other via the first physical link and which second interfaces are coupled to each other via the second physical link, which destination node further comprises an address detector for detecting source interface addresses in information parts and a selector for in dependence of at least a detected source interface address selecting at least one of the destination interfaces for non-redundantly processing at least one of the redundantly exchanged information parts.

By introducing the first source interface and the first destination interface coupled to each other via the first physical link, and by introducing the second source interface and the second destination interface coupled to each other via the second physical link, separate interfaces are used for separate physical links. As a result, each node is a simple modular combination. By introducing the address detector for detecting the source addresses of the source interfaces in the information parts, these source addresses indicate that two information parts are redundant information parts, in other words these source addresses indicate that the two information parts originate from the source interfaces of the same source node. This is a simple indication for indicating redundant information parts, whereby each physical link can be coupled to more than two nodes. By introducing the selector for in dependence of a detected source interface address selecting one of the destination interfaces for non-redundantly processing one of the redundantly exchanged information parts, the detected source interface address is used for determining which information part of the two redundant information parts is to be processed further. This is a simple determination for determining which of the information parts is to be processed non-redundantly.

US 4,780,869 discloses a communication system providing redundancy by connecting each station on the system to two parallel communication media. When one station sends a message to another station the message is transmitted over both media simultaneously. The message consists of a series of frames of information and includes the address of the station to which the message is directed, in other words US 4,780,869 uses a destination address as an indication for indicating redundant information parts, whereby each physical link can not be coupled to more than two nodes, unless a further indication is introduced, which is more complex. Further, the length of the message frames received on each cable need to be determined, for being able to select the signal from the cable that carried the longer frame as the output of the receiver. This is more complex by far than in dependence of a detected source interface address selecting one of the destination interfaces.

The system according to the invention comprises at least a first interface in each node coupled to a first physical link and a second interface in each node coupled to a second physical link. However, more interfaces per node and more physical links between the nodes and more than two nodes are not to be excluded.

An embodiment of the system according to the invention is characterised in that the first source interface address and the second source interface address are identical source interface addresses and in that the first destination interface and the second destination interface are defined by identical destination interface addresses, whereby an information part comprises a data part and a control part, which control part comprises a source interface address and a destination interface address, and which source node comprises a supplier for supplying information parts comprising at least identical data parts to the source interfaces. By using identical source interface addresses and identical destination interface addresses, the complexity of the system according to the invention is further reduced.

An embodiment of the method according to the invention is characterised in that the destination node further comprises a monitor for monitoring information parts received via the destination interfaces and a generator for in response to a monitoring result generating a link parameter per physical link and a comparator for comparing link parameters with thresholds for in response to a comparison result controlling the selector. By introducing the monitor and the generator, link parameters like for example an error, a bit error rate, a checksum, a checksum rate, a quality etc. are generated. By introducing the comparator, the selector makes a selection in dependence of the detected source address and in dependence of the comparison result, for example by keeping a list with preferences.

Each interface is for example a Local Area Network interface or an Ethernet interface. Each information part is for example a packet or a message or a packetised message.

The invention further relates to a source node for redundantly exchanging information parts with a destination node via at least a first physical link and a different second physical link. The source node according to the invention is characterised in that the source node comprises a first source interface defined by a first source interface address and a second source interface defined by a second source interface address, which first source interface is to be coupled to the first physical link and which second source interface is to be coupled to the second physical link, which first source interface address and which second source interface address are identical source interface addresses, whereby an information part comprises a data part and a control part, which control part comprises a source interface address and a destination interface address, and which source node comprises a supplier for supplying information parts comprising at least identical data parts to the source interfaces.

The invention yet further relates to a source module for use in a source node for redundantly exchanging information parts with a destination node via at least a first physical link and a different second physical link. The source module according to the invention is characterised in that the source node comprises a first source interface defined by a first source interface address and a second source interface defined by a second source interface address, which first source interface is to be coupled to the first physical link and which second source interface is to be coupled to the second physical link, which first source interface address and which second source interface address are identical source interface addresses, whereby an information part comprises a data part and a control part, which control part comprises a source interface address and a destination interface address, and which source module comprises a supplier for supplying information parts comprising at least identical data parts to the source interfaces.

The invention also yet further relates to a source processor program product for use in a source node for redundantly exchanging information parts with a destination node via at least a first physical link and a different second physical link. The source processor program product according to the invention is characterised in that the source node comprises a first source interface defined by a first source interface address and a second source interface defined by a second source interface address, which first source interface is to be coupled to the first physical link and which second source interface is to be coupled to the second physical link, which first source interface address and which second source interface address are identical source interface addresses, whereby an information part comprises a data part and a control part, which control part comprises a source interface address and a destination interface address, and which source processor program product comprises a supplying function for supplying information parts comprising at least identical data parts to the source interfaces.

The invention also relates to a destination node for redundantly exchanging information parts with a source node via at least a first physical link and a different second physical link. The destination node according to the invention is characterised in that the destination node comprises a first destination interface and a second destination interface, which first destination interface is to be coupled to the first physical link and which second destination interface is to be coupled to the second physical link, which destination node further comprises an address detector for detecting source interface addresses in information parts and a selector for in dependence of at least a detected source interface address selecting at least one of the destination interfaces for non-redundantly processing at least one of the redundantly exchanged information parts.

The invention yet also relates to a destination module for use in a destination node for redundantly exchanging information parts with a source node via at least a first physical link and a different second physical link. The destination module according to the invention is characterised in that the destination node comprises a first destination interface and a second destination interface, which first destination interface is to be coupled to the first physical link and which second destination interface is to be coupled to the second physical link, which destination module comprises an address detector for detecting source interface addresses in information parts and a selector for in dependence of at least a detected source interface address selecting at least one of the destination interfaces for non-redundantly processing at least one of the redundantly exchanged information parts.

The invention further yet also relates to a destination processor program product for use in a destination node for redundantly exchanging information parts with a source node via at least a first physical link and a different second physical link. The destination processor program product according to the invention is characterised in that the destination node comprises a first destination interface and a second destination interface, which first destination interface is to be coupled to the first physical link and which second destination interface is to be coupled to the second physical link, which destination processor program product comprises an address detecting function for detecting source interface addresses in information parts and a selecting function for in dependence of at least a detected source interface address selecting at least one of the destination interfaces for non-redundantly processing at least one of the redundantly exchanged information parts.

And the invention relates to a method for redundantly exchanging information parts between a source node and a destination node via at least a first physical link and a different second physical link. The method according to the invention is characterised in that the method comprises the steps of
- interfacing the first physical link in the source node via a first source interface defined by a first source interface address;
- interfacing the second physical link in the source node via a second source interface defined by a second source interface address;
- interfacing the first physical link in the destination node via a first destination interface;
- interfacing the second physical link in the destination node via a second destination interface;
- detecting source interface addresses in information parts in the destination node via an address detector; and
- selecting in dependence of at least a detected source interface address in the destination node at least one of the destination interfaces via a selector for non-redundantly processing at least one of the redundantly exchanged information parts.

Embodiments of the source node according to the invention and of the source module according to the invention and of the source processor program product according to the invention and of the destination node according to the invention and of the destination module according to the invention and of the destination processor program product according to the invention and of the method according to the invention correspond with the embodiments of the system according to the invention.

The invention is based upon an insight, inter alia, that it is relatively complex to determine the length of the message frames received on each cable, and is based upon a basic idea, inter alia, that the system according to the invention can be kept relatively simple by introducing separate interfaces in each node per separate physical link, by using source interface addresses for indicating redundant information parts and by selecting an information part to be processed non-redundantly from the redundant information parts in dependence of a detected source interface address.

The invention solves the problem, inter alia, to provide a system which is relatively simple, and is advantageous, inter alia, in that the system can be extended easily with additional nodes.

These and other aspects of the invention will be apparent from and elucidated with reference to the embodiments(s) described hereinafter.

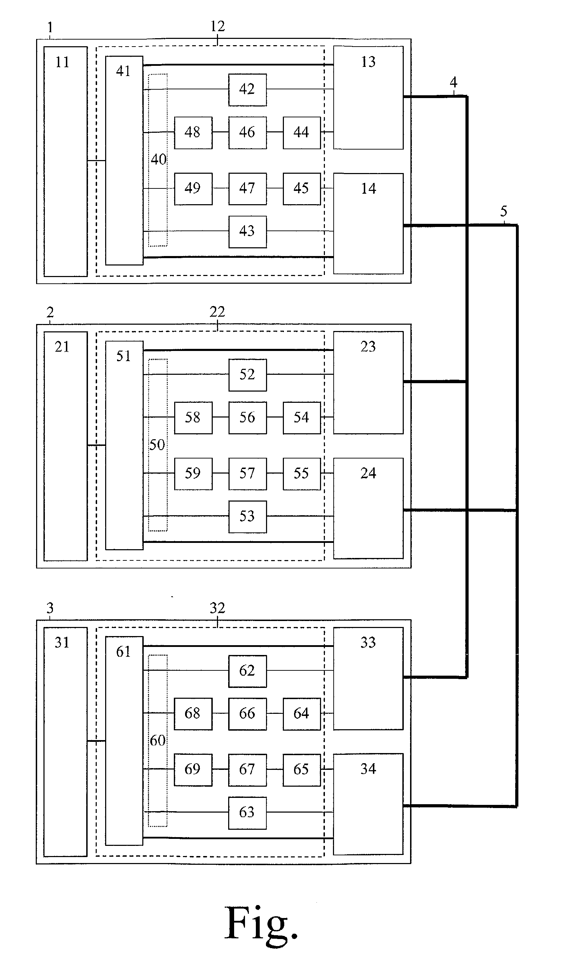

Fig. 1 shows in block diagram form a system according to the invention comprising a source node according to the invention and a destination node according to the invention.

The system according to the invention as shown in Fig. 1 comprises a first node 1 according to the invention and a second node 2 according to the invention and a third node 3 according to the invention coupled to each other via a first physical link 4 and a different second physical link 5 for exchanging information parts redundantly.

The first (second,third) node 1 (2,3) comprises a first source/destination interface 13 (23,33) coupled to the first physical link 4 and a second source/destination interface 14 (24,34) coupled to the second physical link 5. Both source/destination interfaces 13 (23,33) and 14 (24,34) are coupled to a processor system 11 (21,31) via a source/destination module 12 (22,32). The source/destination module 12 (22,32) comprises a supplier/selector 41 (51,61) coupled to both source/destination interfaces 13 (23,33) and 14 (24,34) for supplying and receiving information parts and coupled to the processor system 11 (21,31). The source/destination module 12 (22,32) further comprises a first address adjustor/detector 42 (52,62) coupled to the supplier/selector 41 (51,61) and to the first source/destination interface 13 (23,33) for adjusting and detecting interface addresses and a second address adjustor/detector 43 (53,63) coupled to the supplier/selector 41 (51,61) and to the second source/destination interface 14 (24,34) for adjusting and detecting interface addresses. The source/destination module 12 (22,32) also comprises a first monitor 44 (54,64) coupled to the first source/destination interface 13 (23,33) for monitoring information parts and coupled to a first generator 46 (56,66) for in response to a monitoring result generating a link parameter for the first physical link 4. The first generator 46 (56,66) is further coupled to a first comparator 48 (58,68) for comparing link parameters with thresholds, which first comparator 48 (58,68) is further coupled to the supplier/selector 41 (51,61) for in response to a comparison result controlling the supplier/selector 41 (51,61). The source/destination module 12 (22,32) further also comprises a second monitor 45 (55,65) coupled to the second source/destination interface 14 (24,34) for monitoring information parts and coupled to a second generator 47 (57,67) for in response to a monitoring result generating a link parameter for the second physical link 5. The second generator 47 (57,67) is further coupled to a second comparator 49 (59,69) for comparing link parameters with thresholds, which second comparator 49 (59,69) is further coupled to the supplier/selector 41 (51,61) for in response to a comparison result controlling the supplier/selector 41 (51,61). A controller 40 (50,60) controls units and/or interactions inside the source/destination module 12 (22,32).

The system according to the invention as shown in Fig. 1 functions as follows. The first node 1 acts in a transmitting mode as a source node 1, whereby the source/destination interfaces 13,14 act as source interfaces 13,14, and the source/destination module 12 acts as a source module 12, and the supplier/selector 41 acts as a supplier 41, and the address adjustor/detector 42,43 acts as an address adjustor 42,43. Information parts like packets or messages or packetised messages originate from processor system 11, which, for example, is coupled to and/or forms part of and/or comprises a personal computer etc. These information parts each comprise a data part and a control part and are supplied via the supplier 41 to both source interfaces 13,14, which for example add their source interface address and a destination interface address to the control parts. Alternatively, these source interface addresses and/or these destination interface addresses can be added in the processor system 11 and/or in the source module 12, by introducing address adders. Then, each pair of information parts comprising at least the same data part is transmitted in parallel via the physical links 4,5 to the second node 2, thereby suggesting that the added destination interface addresses define the interfaces 23,24 in the second node 2. In other words, each information part arriving at the supplier 41 is copied into two information parts comprising at least identical data parts, which are redundantly transmitted via the physical links 4,5. Should the first physical link 4 be interrupted, the overall communication will not be interrupted, due to one of each pair of information parts still arriving at the second node 2 via the non-interrupted second physical link 5.

The second node 2 acts in a receiving mode as a destination node 2, whereby the source/destination interfaces 23,24 act as destination interfaces 23,24, and the source/destination module 22 acts as a destination module 22, and the supplier/selector 51 acts as a selector 51, and the address adjustor/detector 52,53 acts as an address detector 52,53. Each pair of information parts arrives at destination interfaces 23,24, which for example remove the source interface addresses defining the source interfaces 13,14 and the destination interface addresses defining the destination interfaces 23,24 and which supply the identical data parts to the selector 51. Alternatively, these source interface addresses defining the source interfaces 13,14 and/or these destination interface addresses defining the destination interfaces 23,24 can be removed in the destination module 22 and/or in the processor system 21, by introducing address removers. Further, the source interface addresses defining the source interfaces 13,14 are supplied from the destination interfaces 23,24 to the address detectors 52,53, which detect that these source interface addresses define the source interfaces 13,14 in the same source node 1. In other words the address detectors 52,53 detect that the pair of information parts originates from the same source node 1. Thereto, for example, the address detectors 52,53 are coupled to each other via a coupling not shown or they consult the controller 50 etc. In response, at least one of the address detectors 52,53 controls the selector 51, possibly via the controller 50, such that only one of the pair of information parts is to be forwarded to the processor system 21, which, for example, is coupled to and/or forms part of and/or comprises a personal computer etc. As a result, only one of each pair of information parts redundantly received from the same source node is further processed non-redundantly. Should the first physical link 4 be interrupted, the overall communication will not be interrupted, due to one of each pair of information parts still arriving at the destination node 2 via the non-interrupted second physical link 5.

Preferably, the first source interface address and the second source interface address are identical source interface addresses, and/or the first destination interface address and the second destination interface address are identical destination interface addresses. By using identical source interface addresses and/or identical destination interface addresses, the complexity of the system according to the invention is further reduced. To make both source interface addresses identical, for example the address adjustors 42,43 are used. These address adjustors 42,43, for example, are coupled to each other via a coupling not shown to be able to consult each other or they consult the controller 40 etc. Such an adjustment of one or both source interface addresses is usually done only once.

To be able to learn from the past, the monitor 54,55 monitors information parts received via the destination interfaces 23,24 and the generator 56,57 generates in response to a monitoring result a link parameter per physical link 4,5. The comparator 58,59 compares link parameters with thresholds like for example predefined thresholds or other link parameters for in response to a comparison result controlling the selector 51. These link parameters for example define one or more errors, one or more bit error rates, one or more checksums, one or more checksum rates, one or more qualities etc. Each time a selection needs to be made, this selection is done in dependence of the detected source address and in dependence of the comparison result, for example by keeping a list with preferences. This list defines the preferred physical link (or the preferred destination interface), and is updated regularly in response to the comparison results. Such a list, for example, is kept in the selector 51, or in the comparator 58,59, or in the controller 50. These comparators 58,59, for example, are coupled to each other via a coupling not shown to be able to consult each other or they consult the controller 50 etc.

In case of an information part corresponding with a frame, and the source interfaces being defined by the same source address, per frame-origin (source address) the following indications need to be kept:

| | | | |
|---|---|---|---|
| Source | Link A DataReceived | Link B DataReceived | Preferred Link |

These fields are used as follows:

Each time a frame arrives:
- The source address is checked and if necessary a new row is created in the table with the Preferred Link field set to Link A. Keeping only 32-bits of the source address should be fine.
- If the frame was received on Link x, the Link x DataReceived field is set for the row corresponding to the source address of this frame.
- If the current value of Preferred Link is Link x the frame is passed to the higher layers (IP-stack/Linklayer), otherwise the frame is discarded. Periodically:

- Each row of the table is scanned and the following truth-table is applied after which the Link x DataReceived fields are cleared.

| Link A DataReceived | Link B DataReceived | Old Preferred Link | New Preferred Link |
|---|---|---|---|
| Y | Y | A | A |
| Y | Y | B | B |
| Y | N | A | A |
| Y | N | B | **A** |
| N | Y | A | **B** |
| N | Y | B | B |
| N | N | A | A |
| N | N | B | B |

The period after which the table is cleaned should be selected carefully in order to maintain the following properties:
- The period should be big enough to avoid that a large queuing delay on one of both links (e.g. caused by hardware and/or software problems in an Ethernet switch or locally on a board) would cause frames to be received more then once. Therefore, the period should be for example one second minimally.
- The period should be small enough to make switchovers as transparent as follows: i.e. the standard error-correction mechanisms (acknowledge and/or retransmit) should be able to recover from this. Therefore, the period should be for example maximally ten seconds.
- The period should not be too short as it could cause quite some load. As a result, the period should be between one second and ten seconds, like for example two seconds.

Each interface 13,14,23,24,33,34 is for example a prior art Local Area Network interface or a prior art Ethernet interface. Although these interfaces will be separate interfaces, it is not to be excluded that a smaller part of one interface in a node and a smaller part of an other interface in the same node can be integrated into a combined part for both interfaces. Alternatively, instead of using address in/outputs and monitor in/outputs of the interfaces, the internal data in/outputs of the interfaces already coupled to the supplier/selector may be used, whereby an address adjustor/detector and a monitor in that case are coupled to this internal data in/output. Usually, the external data in/output of each interface will be coupled to its own physical link.

Due to each node 1,2,3 usually being able to act in a receiving mode as well as in a transmitting mode, each node comprises a supplier/selector, at least two source/destination interfaces and a source/destination module. The source/destination module 12,22,32 may be constructed differently without departing from the scope of this invention. For example, instead of an address adjustor/detector per interface, there may be one address adjustor/detector for all (at least two) interfaces, which one address adjustor/detector is then used in a time-multiplexing manner or comprises single first subunits and double second subunits, and instead of a monitor-generator-comparator-combination per interface, there may be one monitor-generator-comparator-combination for all (at least two) interfaces, which one monitor-generator-comparator-combination is then used in a time-multiplexing manner or comprises single third subunits and double fourth subunits. The single first and third subunits are for example subunits at the supplier/selector side, and the double second and fourth subunits are for example subunits at the interface side. The controller 40,50,60 may be located elsewhere and otherwise, and may comprise the address adjustor/detector, the monitor, the generator and the comparator. This controller might be a processor having an address adjusting/detecting function, a monitoring function, a generating function and a comparing function implemented in software. Further, the before-mentioned address adders and address removers may be implemented correspondingly. Finally, the entire source/destination module 12,22,32 may be implemented in the processor system 11,21,31 in hardware or in software or in a mixture of both.
The expression "for" in for example "for exchanging" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities. The steps of interfacing, detecting and selecting do not exclude further steps, like for example, inter alia, the steps of supplying, monitoring, generating, comparing, adjusting addresses etc.

## Claims

1. System for redundantly exchanging information parts between a source node (1) and a destination node (2) via at least a first physical link (4) and a different second physical link (5), **characterised in that** the source node (1) comprises a first source interface (13) defined by a first source interface address and a second source interface (14) defined by a second source interface address and that the destination node (2) comprises a first destination interface (23) and a second destination interface (24), which first interfaces (13,23) are coupled to each other via the first physical link (4) and which second interfaces (14,24) are coupled to each other via the second physical link (5), which destination node (2) further comprises an address detector (52,53) for detecting source interface addresses in information parts and a selector (51) for in dependence of at least a detected source interface address selecting at least one of the destination interfaces (23,24) for non-redundantly processing at least one of the redundantly exchanged information parts.

2. System as defined in claim 1, **characterised in that** the first source interface address and the second source interface address are identical source interface addresses and **in that** the first destination interface (23) and the second destination interface (24) are defined by identical destination interface addresses, whereby an information part comprises a data part and a control part, which control part comprises a source interface address and a destination interface address, and which source node (1) comprises a supplier (41) for supplying information parts comprising at least identical data parts to the source interfaces (13,14).

3. System as defined in claim 1 or 2, **characterised in that** the destination node (2) further comprises a monitor (54,55) for monitoring information parts received via the destination interfaces and a generator (56,57) for in response to a monitoring result generating a link parameter per physical link (4,5) and a comparator (58,59) for comparing link parameters with thresholds for in response to a comparison result controlling the selector (51 ).

4. Source node (1) for redundantly exchanging information parts with a destination node (2) via at least a first physical link (4) and a different second physical link (5), **characterised in that** the source node (1) comprises a first source interface (13) defined by a first source interface address and a second source interface (14) defined by a second source interface address, which first source interface (13) is to be coupled to the first physical link (4) and which second source interface (14) is to be coupled to the second physical link (5), which first source interface address and which second source interface address are identical source interface addresses, whereby an information part comprises a data part and a control part, which control part comprises a source interface address and a destination interface address, and which source node (1) comprises a supplier (41) for supplying information parts comprising at least identical data parts to the source interfaces (13,14).

5. Source module (12) for use in a source node (1) for redundantly exchanging information parts with a destination node (2) via at least a first physical link (4) and a different second physical link (5), **characterised in that** the source node (1) comprises a first source interface (13) defined by a first source interface address and a second source interface (14) defined by a second source interface address, which first source interface (13) is to be coupled to the first physical link (4) and which second source interface (14) is to be coupled to the second physical link (5), which first source interface address and which second source interface address are identical source interface addresses, whereby an information part comprises a data part and a control part, which control part comprises a source interface address and a destination interface address, and which source module (12) comprises a supplier (41) for supplying information parts comprising at least identical data parts to the source interfaces (13,14).

6. Source processor program product for use in a source node (1) for redundantly exchanging information parts with a destination node (2) via at least a first physical link (4) and a different second physical link (5), **characterised in that** the source node (1) comprises a first source interface (13) defined by a first source interface address and a second source interface (14) defined by a second source interface address, which first source interface (13) is to be coupled to the first physical link (4) and which second source interface (14) is to be coupled to the second physical link (5), which first source interface address and which second source interface address are identical source interface addresses, whereby an information part comprises a data part and a control part, which control part comprises a source interface address and a destination interface address, and which source processor program product comprises a supplying function for supplying information parts comprising at least identical data parts to the source interfaces (13,14).

7. Destination node (2) for redundantly exchanging information parts with a source node (1) via at least a first physical link (4) and a different second physical link (5), **characterised in that** the destination node (2) comprises a first destination interface (23) and a second destination interface (24), which first destination interface (23) is to be coupled to the first physical link (4) and which second destination interface (24) is to be coupled to the second physical link (5), which destination node (2) further comprises an address detector (52,53) for detecting source interface addresses in information parts and a selector (51) for in dependence of at least a detected source interface address selecting at least one of the destination interfaces (23,24) for non-redundantly processing at least one of the redundantly exchanged information parts.

8. Destination module (22) for use in a destination node (2) for redundantly exchanging information parts with a source node (1) via at least a first physical link (4) and a different second physical link (5), **characterised in that** the destination node (2) comprises a first destination interface (23) and a second destination interface (24), which first destination interface (23) is to be coupled to the first physical link (4) and which second destination interface (24) is to be coupled to the second physical link (5), which destination module (22) comprises an address detector (52,53) for detecting source interface addresses in information parts and a selector (51) for in dependence of at least a detected source interface address selecting at least one of the destination interfaces (23,24) for non-redundantly processing at least one of the redundantly exchanged information parts.

9. Destination processor program product for use in a destination node (2) for redundantly exchanging information parts with a souce node (1) via at least a first physical link (4) and a different second physical link (5), **characterised in that** the destination node (2) comprises a first destination interface (23) and a second destination interface (24), which first destination interface (23) is to be coupled to the first physical link (4) and which second destination interface (24) is to be coupled to the second physical link (5), which destination processor program product comprises an address detecting function for detecting source interface addresses in information parts and a selecting function for in dependence of at least a detected source interface address selecting at least one of the destination interfaces (23,24) for non-redundantly processing at least one of the redundantly exchanged information parts.

10. Method for redundantly exchanging information parts between a source node (1) and a destination node (2) via at least a first physical link (4) and a different second physical link (5), **characterised in that** the method comprises the steps of
- interfacing the first physical link (4) in the souce node (1) via a first source interface (13) defined by a first source interface address;
- interfacing the second physical link (5) in the souce node (1) via a second source interface (14) defined by a second source interface address;
- interfacing the first physical link (4) in the destination node (2) via a first destination interface (23);
- interfacing the second physical link (5) in the destination node (2) via a second destination interface (24);
- detecting source interface addresses in information parts in the destination node (2) via an address detector (52,53); and
- selecting in dependence of at least a detected source interface address in the destination node (2) at least one of the destination interfaces via a selector (51) for non-redundantly processing at least one of the redundantly exchanged information parts.
